# EUROPÄISCHE PATENTSCHRIFT

(11) **EP 1 166 169 B1**
(45) Veröffentlichungstag und Bekanntmachung des Hinweises auf die Patenterteilung: **02.11.2005**
(21) Anmeldenummer: 01913642.3
(22) Anmeldetag: 13.02.2001
(51) Int. Cl.: G02C 13/00, G02C 7/14

(54) **VORRICHTUNG ZUR BESTIMMUNG DES ABSTANDES ZWISCHEN DER PUPILLENEBENE UND DER FASSUNGSEBENE**
DEVICE FOR DETECTING THE DISTANCE BETWEEN THE PUPIL PLANE AND THE FRAME PLANE
DISPOSITIF POUR DETERMINER LA DISTANCE ENTRE LE PLAN D'UNE PUPILLE ET LE PLAN D'UNE MONTURE DE LUNETTE

(30) Priorität: 14.02.2000 DE 10006494
(43) Veröffentlichungstag der Anmeldung: 02.01.2002
(73) Patentinhaber: Rodenstock GmbH, 80469 München (DE)
(72) Erfinder: DORSCH, Rainer, 81477 München (DE); WELK, Andrea, 81547 München (DE); BAUMBACH, Peter, 81543 München (DE)
(74) Vertreter: Müller-Boré & Partner Patentanwälte
(86) Internationale Anmeldenummer: PCT/DE2001/000566
(87) Internationale Veröffentlichungsnummer: WO 2001/059510

(56) Entgegenhaltungen:
- FR-A- 2 690 833
- US-A- 2 326 030
- US-A- 4 531 297
- US-A- 4 575 946
- US-A- 4 961 639
- US-A- 5 088 203

## Beschreibung

### Technisches Gebiet

Die Erfindung bezieht sich auf eine Vorrichtung zur Bestimmung des Abstandes zwischen der Pupillenbene eines Auges und der Fassungsebene einer vor dem Auge befindlichen Brillenfassung.

### Stand der Technik

Bei der Optimierung von Brillengläsern ist eine wesentliche Größe der Abstand zwischen dem Augendrehpunkt und der Scheitelebene der augenseitigen Fläche des Brillenglases. Der Ort des Augendrehpunktes ist nicht unmittelbar zugänglich. Aus diesem Grunde wird anstelle des Abstandes Augendrehpunkt/Scheitel der augenseitigen Fläche des Brillenglases der Abstand zwischen dem Hornhaut-Scheitel und dem Scheitel der augenseitigen Fläche des Brillenglases bestimmt. Aus dem gemessenen Hornhautscheitelabstand wird dann unter Zugrundelegung des Gullstrandschen Normalaugenmcdells der Abstand zwischen dem Scheitel der augenseitigen Fläche des Brillenglases und dem Augendrehpunkt berechnet.

Zur Messung des Hornhaut-Scheitelabstandes sind verschiedene Verfahren bekannt:

Bei nahezu allen bekannten Verfahren werden als Referenzebene zur Hornhaut plane Plastikscheiben in die Fassung eingesetzt. Die Messung des Hornhautscheitelabstandes erfolgt dann parallel zum Fassungsbügel, also seitlich am Auge. Die Messung selbst kann zum Beispiel mittels eines bildgebenden Verfahrens, wobei aus dem aufgenommenen Bild der Hornhautscheitelabstand ermittelt wird, oder mittels eines Maßstabes vorgenommen werden.

Nachteilig bei allen bekannten Verfahren ist, daß es nicht möglich ist, den Abstand zwischen dem Scheitel der augenseitigen Fläche des Brillenglases bzw. der Fassungsebene einer vor dem Auge befindlichen Brillenfassung und dem Auge von vorne zu messen.

Dies bedeutet insbesondere dann, wenn weitere Daten, wie beispielsweise die Kontur der Fassung, der Durchstoßpunkt der Sehstrahlen durch die Fassungsebene etc. von vorne mit einem bildgebenden oder einem manuellen Verfahren erfaßt werden, einen zusätzlichen Arbeitsschritt, da zusätzlich zu der Messung von vorne eine Messung von der Seite durchgeführt werden muß.

### Darstellung der Erfindung

Der Erfindung liegt die Aufgabe zugrunde, eine Vorrichtung zur mittelbaren Bestimmung des Abstandes zwischen Hornhaut-Scheitel des Auges und der Fassungsebene einer vor dem Auge befindlichen Brillenfassung unter Benutzung des gemessenen des Abstandes zwischen der Pupillenebene eines Auges und der Fassungsebene einer vor dem Auge befindlichen Brillenfassung anzugeben, bei der die Messung von vorne, d.h. mit Blick auf die Fassung und die Augen erfolgen kann. der Abstand Pupillenebene 3/Fassungsebene 5 in der nachfolgend exemplarisch erläuterten Weise gemessen.

Erfindungsgemäß weist die Vorrichtung zur Bestimmung des Abstandes zwischen der Pupillenebene 2 des Auges 1 und der Fassungsebene 5 der vor dem Auge befindlichen Brillenfassung ein optisches Element 6 auf. Das optische Element ist längs einer Trennlinie 7 in Teile 61 und 62 zweigeteilt. Die Teile 61 und 62 haben eine unterschiedliche prismatische Wirkung. Bei dem gezeigten Ausführungsbeispiel ist das Teil 61 ein Prisma und das Teil 62 eine Glasplatte. Auf der Glasplatte 62 ist ein auf die Prismenstärke geeichter Maßstab 63 mit einer Hilfslinie 64 aufgebracht die zur Fixierung des Irisrandes dient. Mittels des Maßstabes kann direkt der Abstand Fassungsebene 5/Pupillen- bzw. Irisebene 2 abgelesen werden.

Die Vorrichtung wird beispielsweise per Hand mittels eines Griffes 8 in der Fassungsebene 5 positioniert. Dies kann beispielsweise dadurch erfolgen, daß es an eine in die Fassung eingesetzte Stützscheibe angelegt wird.

Dabei ist bevorzugt die Trennlinie 7 zwischen den beiden Prismen bzw. prismatischen Elementen oder dem Prisma 61 und der planparallelen Glasplatte 62 waagrecht ausgerichtet Das Auge 1 des Brillenträgers wird fixiert und zwar derart, daß die untere Hälfte der Iris 9 durch das eine Teil, z.B. die planparallele Glasplatte 62 erscheint und die obere Hälfte der Iris 9 durch das andere Teil, also z. B. das Prisma. Die obere Irishälfte ist dabei gegen-Eine erfindungsgemäße Lösung dieser Aufgabe ist im Patentanspruch 1 angegeben. Weiterbildungen der Erfindung sind Gegenstand der abhängigen Ansprüche.

In einer Halterung wird ein Prisma gegebener Stärke oder ein anderes prismatisch wirksames optisches Element zusammen mit einer planparallelen Glasplatte angebracht. Das Prisma bzw. das prismatisch wirkende optische Element hat die Aufgabe, einen Objektversatz hervorzurufen. Die Basis der Prismas befindet sich dabei links oder rechts, d.h. beim Blick durch das Prisma erscheint ein Gegenstand nach rechts oder links abgelenkt. Beim Blick durch die planparallele Glasplatte dagegen erfährt ein Gegenstand keine Ablenkung. Der Versatz zwischen einem durch das Prisma betrachteten Gegenstands und dem gleichzeitig durch die planparallele Platte unverschobenen Gegenstand, ist ein Maß für den Abstand zwischen Prismenebene bzw. Ebene der planparallelen Platte und dem Gegenstand. Der Zusammenhang zwischen Abstand und Versatz ist linear. Zum unmittelbaren Ablesen des Versatzes ist auf der planparallelen Glasplatte eine auf die Prismenstärke geeichte Strichskala angebracht. Zur Erhöhung der Meßempfindlichkeit kann anstelle der planparallelen Glasplatte ein prismatisch wirkendes optisches Element mit entgegengesetzter Basis, aber gleicher Stärke benutzt werden.

Die Stärke des Prismas bestimmt die Empfindlichkeit der Abstandsmessung. Je stärker das Prisma, desto stärker der Versatz und desto stärker auch der relative Versatz zwischen zwei unterschiedlichen Gegenstandsweiten.

Bevorzugt ist eines der beiden Teile mit prismatischer Wirkung ein Prisma, ein Echelette-Gitter, ein Beugungsgitter oder ein Hologramm, das andere Teil kann ebenfalls ein Teil mit prismatischer Wirkung und insbesondere ein identisches Teil mit entgegengesetzter Basis oder eine planparallele Platte sein.

Die Einrichtung, die die Verschiebung der beiden Teilbilder erfaßt, kann ein auf dem optischen Element aufgebrachter Maßstab oder ein Bilderfassungssystem sein.

Im Falle der Verwendung eines Maßstabes ist es bevorzugt, wenn der Maßstab eine Hilfslinie für die Fixierung des Irisrandes hat. Weiterhin kann der Beginn des Maßstabes gegenüber der Hilfslinie für die Fixierung des Irisrandes die Vorderkammertiefe des Auges berücksichtigen.

Bei in etwa horizontaler Anordnungen der Trennlinie können die Abmessungen des optischen Elements in horizontaler und vertikaler Richtung in etwa einer durchschnittlichen Breite bzw. Höhe eines Auges entsprechen.

Ferner kann an dem optischen Element eine Halterung oder ein Tubus angebracht sein, der eine Lupe zur zusätzlichen Vergrößerung der Strichskala aufweisen kann.

In jedem Falle ist es bevorzugt, wenn das optische Element in etwa in der Ebene der Fassung angeordnet ist.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:
- Fig. 1: eine Darstellung zur Erläuterung des Meßproblems,
- Fig. 2: eine erfindungsgemäße Vorrichtung, und
- Fig. 3: den Versatz der Iris-Teilbilder.

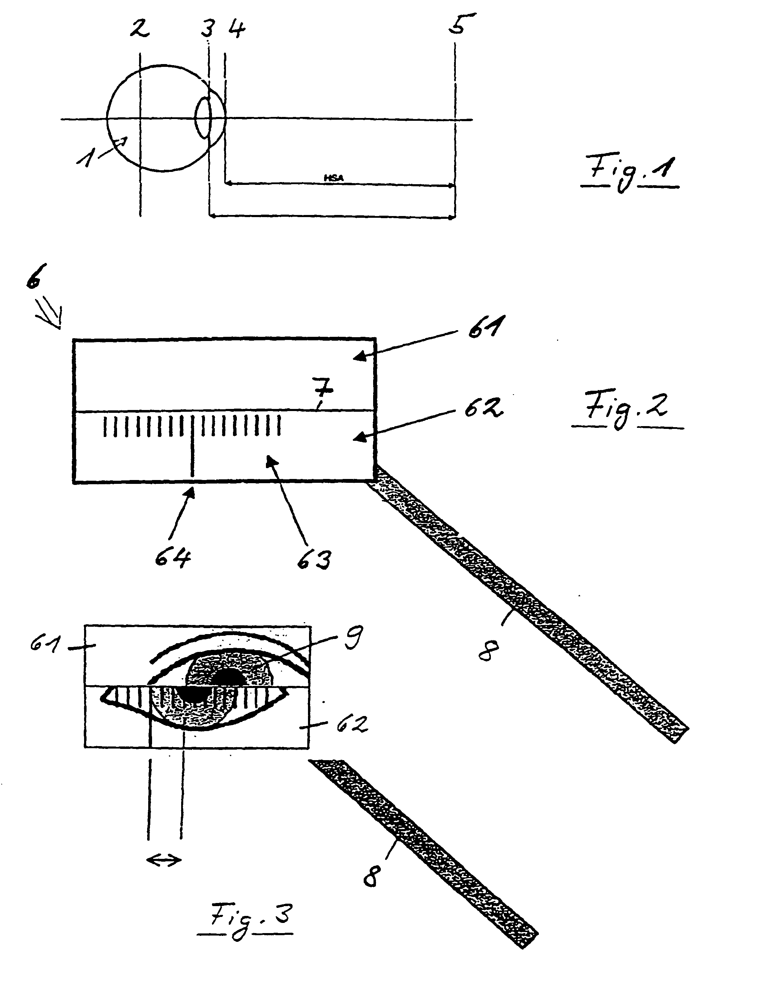

Fig. 1 erläutert das der Erfindung zugrunde liegende Meßproblem:

### Darstellung eines Ausführungsbeispiels

Ein nur schematisch dargestelltes Auge 1 hat eine Augendrehpunktsebene 2, eine Pupillenebene 3 und einen Hornhautscheitel 4. Vor dem Auge 1 befindet sich eine Brillenfassung, von der in Fig. 1 lediglich die Fassungsebene 5 dargestellt ist. Bei der Optimierung von Brillengläsern ist eine wesentliche Größe der Abstand zwischen der Augendrehpunktsebene 2 und der Scheitelebene der augenseitigen Fläche des Brillenglases. Da der Ort des Augendrehpunktes nicht unmittelbar zugänglich ist, wird erfindungsgemäß anstelle des gemäß dem Stand der Technik gemessenen Abstandes Hornhautscheitel 4/ Fassungsebene 5 über der unteren Irishälfte, je nach Abstand, mehr oder weniger verschoben. In Fig. 3 wird die obere Irishälfte gegenüber der unteren Irishälfte nach rechts verschoben, d.h. die Basis des Prismas befindet sich auf der linken Seite. Gemessen wird der Versatz von unverschobenen Irisrand zu verschobenen Irisrand. Eine entsprechend auf den Abstand geeichten Strichskala, die sich auf der planparallelen Glasplatte befindet, gibt dem Betrachter unmittelbar Auskunft über den Abstand zwischen der Pupillenebene des betrachteten Auges und der Fassungsebene der Brille. Alternativ kann sich der Maßstab auch auf dem prismatisch wirkenden Element befinden.

Unter Einbeziehung der Vorderkammertiefe des Gullstrandschen Normalauges (Abstand zwischen Hornhaut-Scheitel 3 des Auges und der Pupillenebene 2 des Auges) kann dann auf den Abstand zwischen Fornhaut-Scheitel 3 des Auges 1 und der Fassungsebene 5 zurückgerechnet werden. Dieser durch die Vorderkammertiefe zusätzliche Versatz kann auch in der Strichskala mit berücksichtigt werden, so daß der Abstand Hornhautscheitel 3 / Fassungsebene 5 direkt am Maßstab abgelesen werden kann.

Verwendet man zwei prismatisch wirkende Elemente, so verdoppelt sich die Meßempfindlichkeit der Vorrichtung.

Die erfindungsgemäße Vorrichtung ist für beide Augen verwendbar und hat bevorzugt die räumlichen Dimensionen einer durchschnittlichen Augenbreite und einer durchschnittlichen Augenhöhe.

Das optische Element kann an einer geeigneten Halterung, wie dem in Fig. 2 gezeigten Griff 8 befestigt werden und direkt zwischen Zeigefinger und Daumen gehalten werden. Dabei können sich in die optischen Elemente auf der dem Messenden zugewandten Seite, auf der dem Messenden abgewandten S. oder auf beiden Seiten der Meßhalterung befinden.

## Patentansprüche

1. Vorrichtung zur Bestimmung des Abstandes zwischen der Pupillenebene eines Auges und der Fassungsebene einer vor dem Auge befindlichen Brillenfassung, mit
- einem optischen Element, das längs einer Trennlinie zweigeteilt ist, und dessen beide Teile unterschiedliche prismatische Wirkungen aufweisen,
- und einer Einrichtung, die die Verschiebung der beiden resultierenden Teilbilder erfaßt.

2. Vorrichtung nach Anspruch 1,
**dadurch gekennzeichnet, daß** wenigstens eines der Teile mit prismatischer Wirkung ein Prisma, ein Echelette-Gitter, ein Beugungsgitter oder ein Hologramm ist.

3. Vorrichtung nach Anspruch 1 oder 2,
**dadurch gekennzeichnet, daß** der andere Teil des optischen Elements eine planparallele Platte ist.

4. Vorrichtung nach Anspruch 1 oder 2,
**dadurch gekennzeichnet, daß** beide Teile optische Elemente mit prismatischer Wirkung gleicher Stärke und unterschiedlicher Versatzrichtung sind.

5. Vorrichtung nach einem der Ansprüche 1 bis 4,
**dadurch gekennzeichnet, daß** die Einrichtung, die die Verschiebung der beiden Teilbilder erfaßt, ein auf dem optischen Element aufgebrachter Maßstab ist.

6. Vorrichtung nach Anspruch 5,
**dadurch gekennzeichnet, daß** der Maßstab eine Hilfslinie für die Fixierung des Irisrandes hat.

7. Vorrichtung nach Anspruch 4 oder 5,
**dadurch gekennzeichnet, daß** der Beginn des Maßstabes gegenüber der Hilfslinie für die Fixierung des Irisrandes die Vorderkammertiefe des Auges berücksichtigt.

8. Vorrichtung nach einem der Ansprüche 1 bis 4,
**dadurch gekennzeichnet, daß** die Einrichtung, die die Verschiebung der beiden Teilbilder erfaßt, ein Bilderfassungssystem ist.

9. Vorrichtung nach einem der Ansprüche 1 bis 8,
**dadurch gekennzeichnet, daß** bei in etwa horizontaler Anordnungen der Trennlinie die Abmessungen des optischen Elements in horizontaler und vertikaler Richtung in etwa einer durchschnittlichen Breite bzw. Höhe eines Auges entsprechen.

10. Vorrichtung nach einem der Ansprüche 1 bis 9,
**dadurch gekennzeichnet, daß** an dem optischen Element eine Halterung oder ein Tubus angebracht ist.

11. Vorrichtung nach Anspruch 10,
**dadurch gekennzeichnet, daß** der Tubus eine Lupe zur zusätzlichen Vergrößerung der Strichskala aufweist.

12. Vorrichtung nach einem der Ansprüche 1 bis 11,
**dadurch gekennzeichnet, daß** das optische Element in der Ebene der Fassung angeordnet ist.

## Claims

1. Device for determining the distance between the pupil plane of an eye and the frame plane of a spectacle frame located in front of the eye, with
• an optical element, which is divided into two along a separation line, both parts thereof having different prismatic effects,
• and a means for detecting the displacement of the two resulting partial images.

2. Device according to Claim 1, **characterised in that** at least one of the parts with prismatic effect is a prism, an echelette grating, a diffraction grating or a hologram.

3. Device according to Claim 1 or 2, **characterised in that** the other part of the optical element is a parallel-sided plate.

4. Device according to Claim 1 or 2, **characterised in that** both parts are optical elements with prismatic effect of the same intensity and different displacement direction.

5. Device according to one of Claims 1 to 4, **characterised in that** the means, which detects the displacement of the two partial images, is a scale attached to the optical element.

6. Device according to Claim 5, **characterised in that** the scale has an auxiliary line for fixating the iris edge.

7. Device according to Claim 4 or 5, **characterised in that** the beginning of the scale takes into consideration the anterior chamber of the eye in relation to the auxiliary line for fixating the iris edge.

8. Device according to one of Claims 1 to 4, **characterised in that** the means, which detects the displacement of the two partial images, is an image acquisition system.

9. Device according to one of Claims 1 to 8, **characterised in that** in the case of approximately horizontal arrangements of the separation line, the dimensions of the optical element in horizontal and vertical direction correspond approximately to an average width or height of an eye.

10. Device according to one of Claims 1 to 9, **characterised in that** a mounting or tube is attached to the optical element.

11. Device according to Claim 10, **characterised in that** the tube has a magnifier for additional magnification of the line scale.

12. Device according to one of Claims 1 to 11, **characterised in that** the optical element is arranged in the plane of the frame.

## Revendications

1. Dispositif destiné à déterminer la distance entre le plan de la pupille d'un oeil et le plan de la monture d'une monture de lunettes située devant l'oeil, avec
- un élément optique, qui est divisé en deux le long d'une ligne de séparation, et dont les deux parties comprennent des effets prismatiques différents,
- et un appareil qui détecte le déplacement des deux segments d'image résultants.

2. Dispositif selon la revendication 1,
**caractérisé en ce qu'**au moins une des parties à effet prismatique est un prisme, une grille échelette, un réseau de diffraction ou un hologramme.

3. Dispositif selon la revendication 1 ou 2,
**caractérisé en ce que** l'autre partie de l'élément optique est une plaque à faces parallèles et planes.

4. Dispositif selon la revendication 1 ou 2,
**caractérisé en ce que** les deux parties sont des éléments optiques à effet prismatique présentant une densité équivalente et une direction de décalage différente.

5. Dispositif selon l'une des revendications 1 à 4,
**caractérisé en ce que** l'appareil, qui détecte le déplacement des deux segments d'image, est une règle graduée appliquée sur l'élément optique.

6. Dispositif selon la revendication 5,
**caractérisé en ce que** la règle graduée présente une ligne auxiliaire destinée à fixer le bord de l'iris.

7. Dispositif selon la revendication 4 ou 5,
**caractérisé en ce que** le début de la règle graduée, par rapport à la ligne auxiliaire destinée à fixer le bord de l'iris, prend en compte la profondeur de la chambre antérieure de l'oeil.

8. Dispositif selon l'une des revendications 1 à 4,
**caractérisé en ce que** l'appareil, qui détecte le déplacement des deux segments d'image, est un système d'enregistrement d'image.

9. Dispositif selon l'une des revendications 1 à 8,
**caractérisé en ce que**, dans le cas d'agencements approximativement horizontaux de la ligne de séparation, les dimensions de l'élément optique dans les directions horizontale et verticale correspondent approximativement à une largeur et/ou une hauteur moyennes d'un oeil.

10. Dispositif selon l'une des revendications 1 à 9,
**caractérisé en ce qu'**une bride de support ou un tube est aménagé(e) sur l'élément optique.

11. Dispositif selon la revendication 10,
**caractérisé en ce que** le tube comprend une loupe destinée à agrandir encore une fois l'échelle à traits.

12. Dispositif selon l'une des revendications 1 à 11,
**caractérisé en ce que** l'élément optique est disposé dans le plan de la monture.
